# EUROPEAN PATENT SPECIFICATION

(11) **EP 4 290 381 B1**
(45) Date of publication and mention of the grant of the patent: **01.10.2025**
(21) Application number: 21927717.5
(22) Date of filing: 29.12.2021
(51) Int. Cl.: G06F 9/50, G06F 9/54

(54) **NETWORK CARD, COMPUTING DEVICE AND DATA ACQUISITION METHOD**
NETZWERKKARTE, COMPUTERVORRICHTUNG UND DATENERFASSUNGSVERFAHREN
CARTE RÉSEAU, DISPOSITIF INFORMATIQUE ET PROCÉDÉ D'ACQUISITION DE DONNÉES

(30) Priority: 24.02.2021 CN 202110206628
(43) Date of publication of application: 13.12.2023
(73) Proprietor: Huawei Technologies Co., Ltd., Shenzhen, Guangdong 518129 (CN)
(72) Inventor: HE, Lei, Shenzhen, Guangdong 518129 (CN); PAN, Xiaogang, Shenzhen, Guangdong 518129 (CN)
(74) Representative: Isarpatent
(86) International application number: PCT/CN2021/142612
(87) International publication number: WO 2022/179293

(56) References cited:
- CN-A- 106 790 420
- CN-A- 111 064 750
- CN-A- 111 385 206
- CN-B- 105 874 757
- US-A1- 2005 169 277
- US-A1- 2010 232 448

## Description

### TECHNICAL FIELD

This dislosure relates to the high-performance computing field, and in particular, the invention relates to a network adapter, a computing device, and a data acquisition method.

### BACKGROUND

Currently, data is exchanged in communication between a source process of a sending node and a destination process of a receiving node mainly based on a message passing interface (Message Passing Interface, MPI). A send (send) message generated by the sending node includes a process identifier and a tag of the destination process. A receive (recv) message generated by the receiving node includes a process identifier and a tag of the source process. The tags indicate data transmitted between the source process and the destination process.

Usually, in a process in which a processor of the receiving node runs the destination process, a tag generated by the processor is compared with tags stored in a main memory of the receiving node one by one, so that the processor acquires data that is of the source process and that is transmitted by the sending node. As a result, the processor of the receiving node consumes a large amount of computing resources to perform tag matching. This reduces utilization of the computing resources of the processor.
US 2010/232448 A1 relates to a technology for interconnecting a plurality of computing platforms into a cluster, specifically addressing the scalability and performance issues in large cluster systems comprising thousands of interconnected computer systems.

### SUMMARY

The object of the present invention is to provide a network adapter, a computing device, and a data acquisition method, to unload a tag matching operation performed by a processor for data acquisition to another chip for processing, and release computing resources of the processor, thereby effectively improving utilization of the computing resources of the processor. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides a network adapter, where the network adapter includes a first processor and a memory. The memory stores a computer-readable program and first information, where the first information indicates a tag that is sent by a sending node and fails in tag matching performed by the network adapter. The first processor is configured to execute the computer-readable program in the memory, to enable the network adapter to perform the following operations: After receiving a first tag acquired from a second processor, the network adapter performs tag matching based on the first tag and the tag indicated by the first information. If the tag matching succeeds, it indicates that the first information includes the first tag, and first data is sent to the second processor, that is, the first data corresponding to the first tag is sent to the second processor. The tag indicated by the first information indicates a first send message sent by the sending node, and the first send message includes the first data or information about the first data. A receiving node includes the network adapter and the second processor. The first information includes the tag that is sent by the sending node and that fails in tag matching performed by the network adapter.

In this way, compared with a tag matching operation performed by the second processor of the receiving node, in a method provided in embodiments of this application, the tag matching operation is unloaded to the network adapter, and the network adapter performs the tag matching operation, so that computing resources of the second processor in the receiving node are released, and the computing resources of the second processor in the receiving node can process another task, thereby improving utilization of the computing resources of the second processor in the receiving node.

The second processor may be a central processing unit (central processing unit, CPU), including one or more CPU cores. In addition, the second processor may alternatively be an application-specific integrated circuit (application-specific integrated circuit, ASIC), or may be configured as one or more integrated circuits, for example, one or more microprocessors (microprocessor, uP), or one or more field programmable gate arrays (field programmable gate array, FPGA). The second processor may execute various functions of the receiving node by running or executing a software program stored in a main memory included in the receiving node and invoking data stored in the main memory.

In addition, the memory further stores second information, and the second information includes a tag that is acquired from the second processor and that fails in tag matching performed by the network adapter. The operations performed by the network adapter further include: If the tag matching fails, the first tag is stored in a storage space for storing the second information in the memory. In this way, the network adapter stores the first tag in the storage space for storing the second information in the memory of the network adapter, thereby avoiding data exchanges between the second processor of the receiving node and the network adapter, and reducing a data acquisition delay.

The second processor is connected to the network adapter through a bus, the network adapter receives, through the bus, the first tag sent by the second processor, and the network adapter sends the first data to the second processor through the bus. The bus may be an industry standard architecture (industry standard architecture, ISA) bus, a peripheral component interconnect (peripheral component interconnect, PCI) bus, a high-speed serial computer extended (peripheral component interconnect express, PCIe) bus, an extended industry standard architecture (extended industry standard architecture, EISA) bus, or the like. The bus may be classified into an address bus, a data bus, a control bus, or the like.

The first send message is transmitted, through a network, by a source process run by the sending node to a destination process run by the receiving node. For example, the sending node and the receiving node transmit data to each other through the network using an interconnection technology. The interconnection technology may be, for example, an infiniband (infiniband, IB) technology, a remote direct memory access over converged Ethernet (Remote Direct Memory Access over Converged Ethernet, RoCE), or a transmission control protocol (Transmission Control Protocol, TCP). The sending node and the receiving node may belong to a same cluster or belong to different clusters, which is not limited. The cluster may be a high-performance computing (High-performance computing, HPC) cluster. The receiving node and the sending node communicate with each other through an MPI.

In addition, if the tag matching succeeds, the operations performed by the network adapter further include: The first data is acquired from the first information based on the first tag, where the first information includes the first data; or the first data is acquired based on the information about the first data associated with the first tag, where the information about the first data indicates information about an address at which the first data is stored.

For example, that the first data is acquired based on the address associated with the first tag includes: The first data is acquired from a storage space that is in a memory and that is indicated by the address associated with the first tag.

For another example, that the first data is acquired based on the address associated with the first tag includes: The first data is acquired from a storage space that is in the sending node and that is indicated by the address associated with the first tag.

In this way, the network adapter acquires the first data, and then sends the first data to the second processor. To prevent the second processor from notifying the network adapter of acquiring the first data after the tag matching succeeds, the network adapter transmits the acquired first data to the second processor. A quantity of interactions between the second processor of the receiving node and the network adapter is reduced, and the data acquisition delay is reduced.

Optionally, the first information further includes a first identifier, and the first identifier indicates that the first send message includes the first data. The network adapter may determine, based on the first identifier, that the first send message includes the first data. The first information may further include a second identifier, and the second identifier indicates the receiving node to acquire the first data from the sending node. The network adapter may determine, based on the second identifier, that the first send message does not include the first data, and acquire the first data from the sending node. In this way, the network adapter determines a manner of acquiring the first data, that is, the network adapter acquires the first data from the receiving node or acquires the first data from the sending node.

Optionally, after acquiring the first data, the network adapter deletes the first tag in the first information. In this way, the tag occupies less storage space of the memory of the network adapter, and storage efficiency of the memory of the network adapter is improved.

In another possible implementation, the memory further stores the second information, and the second information includes the tag that is acquired from the second processor and that fails in tag matching performed by the network adapter. The operations performed by the network adapter further include: Tag matching is performed based on a second tag and the tag included in the second information. If the tag matching fails, the second tag is stored in a storage space for storing the first information in the memory. The second tag indicates a second send message sent by the sending node, the second send message includes second data or information about the second data, and the second tag is acquired from the second send message that is sent by the sending node and received by the network adapter through the network. In this way, the network adapter stores the second tag in the storage space for storing the first information in the memory of the network adapter, thereby avoiding data exchanges between the second processor of the receiving node and the network adapter, and reducing the data acquisition delay.

In addition, if the tag matching succeeds, the operations performed by the network adapter further include: The second data included in the second send message is sent to the second processor; or the second data is acquired from the sending node through the network based on the information about the second data, and the second data is sent to the second processor, where the information about the second data indicates a location at which the sending node stores the second data.

Optionally, after acquiring the second data, the network adapter deletes the second tag in the second information. In this way, the tag occupies less storage space of the memory of the network adapter, and storage efficiency of the memory of the network adapter is improved.

Optionally, the network adapter controls an execution of a tag writing operation on the first information and the second information. Specifically, the network adapter forbids the execution of a tag writing operation on the first information included in the memory of the network adapter, to avoid abnormal tag matching success or matching failure in a tag matching operation due to a case that the network adapter receives another tag and performs a tag writing operation on the first information during this tag matching, thereby improving reliability of the tag matching. In addition, a tag writing operation is forbidden to be executed on the second information included in the memory of the network adapter, to avoid abnormal tag matching success or matching failure in a tag matching operation due to a case that the network adapter receives another tag and performs a tag writing operation on the second information during this tag matching, thereby improving reliability of the tag matching.

According to a second aspect according to the invention, this application provides a computing device. The computing device includes the second processor and the network adapter according to the first aspect or any possible implementation of the first aspect. The second processor and the network adapter are connected through a bus, and the second processor and the network adapter transmit a tag and data through the bus.

According to a third aspect according to the invention, this application provides a data acquisition method. The method is performed by a network adapter. The network adapter includes a first processor and a memory. The method includes: Tag matching is performed based on the first tag and the tag indicated by the first information. If the tag matching succeeds, the first data corresponding to the first tag is sent to the second processor. The first tag indicates a first send message sent by a sending node, the first send message includes first data or information about the first data, the first tag is acquired from a second processor in a receiving node, the receiving node further includes the network adapter, the first information includes a tag that is sent by the sending node and that fails in tag matching performed by the network adapter, and the receiving node and the sending node communicate with each other through an MPI.

In a possible implementation, the memory further stores the second information, and the second information includes the tag that is acquired from the second processor and that fails in tag matching performed by the network adapter. The method further includes: If the tag matching fails, the first tag is stored in a storage space for storing the second information in the memory.

In another possible implementation, the method further includes: The memory further stores the second information, and the second information includes the tag that is acquired from the second processor and that fails in tag matching performed by the network adapter. The method further includes: Tag matching is performed based on a second tag and the tag included in the second information. If the tag matching fails, the second tag is stored in a storage space for storing the first information in the memory. The second tag indicates a second send message sent by the sending node, the second send message includes second data or information about the second data, and the second tag is acquired from the second send message that is sent by the sending node and received by the network adapter through the network.

In another possible implementation, the method further includes: If the tag matching succeeds, the method further includes: The second data included in the second send message is sent to the second processor; or the second data is acquired from the sending node through the network based on the information about the second data, and the second data is sent to the second processor, where the information about the second data indicates information about an address at which the sending node stores the second data.

According to a fourth aspect not claimed, this application provides a computer-readable storage medium, including computer software instructions. When the computer software instructions are run on a computing device, the computing device is enabled to perform the operation steps according to the first aspect or any possible implementation of the first aspect.

According to a fifth aspect not claimed, this application provides a computer program product. When the computer program product is run on a computer, the computing device is enabled to perform the operation steps according to the first aspect or any possible implementation of the first aspect.

In this application, the implementations according to the foregoing aspects may be further combined to provide more implementations.

### BRIEF DESCRIPTION OF DRAWINGS

FIG. 1 is a schematic diagram of a structure of a communication system according to an embodiment of this application;
FIG. 2 is a schematic diagram of a data acquisition process provided in the current technology;
FIG. 3 is a schematic diagram of composition of a computing device according to an embodiment of this application;
FIG. 4 is a flowchart of a data acquisition method according to an embodiment of this application;
FIG. 5 is a flowchart of a data acquisition method according to an embodiment of this application;
FIG. 6 is a flowchart of a data acquisition method according to an embodiment of this application;
FIG. 7 is a schematic diagram of a structure of a data packet according to an embodiment of this application;
FIG. 8 is a schematic diagram of a data acquisition process according to this application; and
FIG. 9 is a schematic diagram of a structure of a network adapter according to this application.
   In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

An HPC cluster refers to a computer cluster system. The HPC cluster includes a plurality of computers that are connected together using various interconnection technologies. The interconnection technologies may be, for example, IB, a RoCE, or a TCP. The HPC provides an ultra-high floating-point computing capability to meet computing requirements for intensive and massive data computing processing. The plurality of computers connected together have a comprehensive computing capability to resolve large-scale computing problems. For example, the HPC cluster is used to resolve large-scale computing problems and computing requirements related to industries such as scientific researches, weather forecast, simulation experiments, biopharmacy, military researches, gene sequencing, and image processing. When the HPC cluster is used to resolve large-scale computing problems, computing time of data processing can be effectively shortened, and computing precision is improved. Usually, a management node in the HPC cluster may decompose a computing task, and allocate decomposed computing tasks to a plurality of computing nodes, and the plurality of computing nodes complete the computing tasks in parallel.

Currently, an MPI is a common used parallel communication protocol for communication between the computing nodes in the HPC cluster. It may be understood that, processes of the computing nodes exchange data through the MPI. In embodiments of this application, a computing node for sending data may be referred to as a sending node. A computing node for receiving data may be referred to as a receiving node.

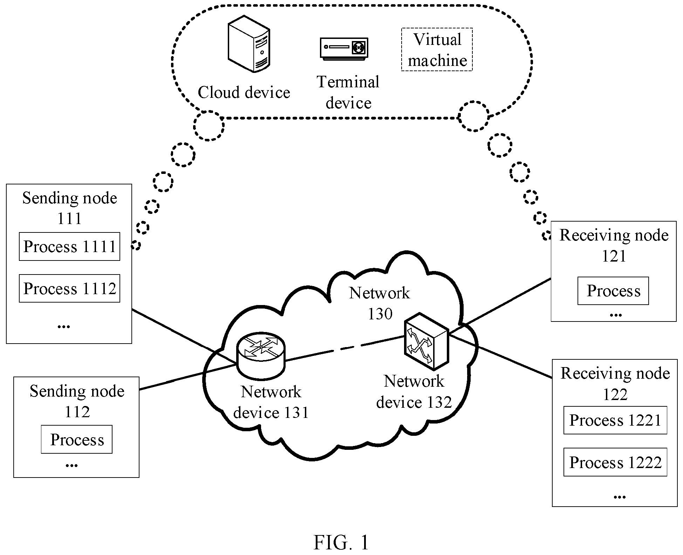

FIG. 1 is a schematic diagram of a structure of a communication system according to an embodiment of this application. As shown in FIG. 1, the communication system includes at least one sending node (such as a sending node 111 and a sending node 112 shown in FIG. 1) and at least one receiving node (such as a receiving node 121 and a receiving node 122 shown in FIG. 1). The sending node and the receiving node in the communication system shown in FIG. 1 may belong to a same cluster or belong to different clusters, which is not limited. The sending node may be a physical device. For example, the sending node may be a cloud device or a terminal device. Alternatively, the sending node may be a virtual machine on a physical device. The receiving node may be a physical device. For example, the receiving node may be a cloud device or a terminal device. Alternatively, the receiving node may be a virtual machine on a physical device. The cloud device is, for example, a server. The terminal device is, for example, an edge node device.

It should be noted that, the sending node and the receiving node may run a plurality of processes. For example, the sending node 111 runs a process 1111 and a process 1112. For another example, the receiving node 122 runs a process 1221 and a process 1222. The plurality of processes run by the sending node and the receiving node may be different application processes or a same application process, which is not limited. The process of the sending node and the process of the receiving node may communicate with each other based on a point-to-point communication (point-to-point communication) manner or a multi-point communication manner. The point-to-point communication manner refers to a manner in which one source process communicates with one destination process. The source process is configured to send data. The destination process is configured to receive data. The multi-point communication manner includes a one-to-many communication manner, a many-to-one communication manner, and a many-to-many communication manner. The one-to-many communication manner refers to a manner in which one source process communicates with a plurality of destination processes. The many-to-one communication manner refers to a manner in which a plurality of source processes communicate with one destination process. The many-to-many communication manner refers to a manner in which a plurality of source processes communicate with a plurality of destination processes. For example, the process of the sending node and the process of the receiving node may interact data through the MPI.

When the sending node runs, in a process of running the source process, an MPI send (MPI_SEND) function, the sending node may generate a send (send) message based on the MPI_SEND function, and send the send message to the receiving node. The send message may include data, or the send message does not include data but includes an address of a storage space for storing data in the sending node. The send message may also be referred to as an MPI_SEND message. The MPI_SEND function is pre-written in a program of the source process.

A format of the MPI_SEND function may be MPI_SEND(buf,count,datatype,dest,tag,comm), where buf indicates an initial address of a storage location of the data, in the sending node, transmitted by the sending node using the send message; datatype indicates data types of the data transmitted through the send message, and the data types include an integer type, a real type, and a character type; count indicates a quantity of the data types of the data transmitted through the send message; dest indicates a process identifier of the destination process in the receiving node, and the destination process is a process of receiving the data transmitted through the send message; tag indicates the send message, and tag is used to distinguish different send messages interacted between a same source process and a same destination process; and comm indicates a process group identifier of a process group (process group) to which the destination process belongs, the process group may also be referred to as a communicator, and the process group identifier and the process identifier may uniquely identify a process.

The MPI_SEND function indicates the sending node to send count datatypes of data in a buffer to a destination process whose process identifier is dest.

The MPI_SEND message includes an envelope part and a data part. The envelope part includes dest, tag, and comm. The data part includes buf, count, and datatype.

When the receiving node runs, in a process of running the destination process, an MPI receive (MPI_RECV) function, the receiving node acquires the data that is of the source process and that is transmitted by the sending node. The receiving node may generate a receive (recv) message based on the MPI_RECV function. The receive message includes a tag that indicates the data of the source process in the sending node, so that the receiving node acquires, based on the tag, the data that is of the source process and that is transmitted by the sending node. The receive message may also be referred to as an MPI_RECV message. The MPI_RECV function is pre-written in a program of the destination process.

A format of the MPI_RECV function may be MPI_RECV(buf,count,datatype,source,tag,comm,status), where buf indicates an initial address at which the receiving node stores the acquired data transmitted through the send message; datatype indicates data types of the data acquired through the receive message, and the data types include an integer type, a real type, and a character type; count indicates a quantity of the data types of the data acquired through the receive message; source indicates a process identifier of the source process in the sending node, and the source process is a process for sending data; tag is used to distinguish different send messages interacted between a same source process and a same destination process; comm indicates a process group identifier of a process group (process group) to which the source process belongs; and status indicates whether the receive message is received correctly or incorrectly.

The MPI_RECV function indicates the receiving node to receive no more than count datatypes of data from a source process whose process identifier is source, where an identifier of the data is tag, and store the data in a storage space whose initial address is buf.

The MPI_RECV message includes an envelope part and a data part. The envelope part includes source, tag, and comm. The data part includes buf, count, and datatype.

After generating the data, the sending node may encapsulate the send message to generate a data packet suitable for network transmission. The sending node may transmit data to the receiving node through a network 130. The network 130 may be an interconnection network. The interconnection network may include at least one network device (for example, a network device 131 and a network device 132). In this embodiment of this application, the network device may be a router, a switch, a load balancer, a dedicated firewall, or the like.

The sending node and the receiving node may be connected to the network device in a wireless or wired manner. FIG. 1 is only a schematic diagram. The communication system may further include another device, for example, may further include another wireless device, which is not shown in FIG. 1. Quantities of the sending nodes, network devices, and receiving nodes included in the communication system are not limited in this embodiment of this application.

However, in a process in which the source process of the sending node and the destination process of the receiving node exchange data through the MPI, a moment at which the receiving node receives the data of the source process may be different from a moment at which the receiving node acquires the data of the source process. Therefore, in a case that the receiving node needs to acquire the data of the source process, the receiving node determines whether the data transmitted by the sending node has been received. For example, before the receiving node acquires the data of the source process, the receiving node has received the data. For another example, before the receiving node acquires the data of the source process, the receiving node has not received the data.

Therefore, a processor of the receiving node matches the tag in the receive message with the tag in the send message. Specifically, the processor of the receiving node compares the tag included in the MPI_RECV function with tags stored in a main memory of the receiving node one by one. If the main memory of the receiving node does not store the tag included in the MPI_RECV function, it indicates that the receiving node has not received the data transmitted by the sending node; or if the main memory of the receiving node stores the tag included in the MPI_RECV function, it indicates that the receiving node has received the data transmitted by the sending node. In this way, the receiving node determines, by tag matching, whether the data transmitted by the sending node has been received. Further, the receiving node acquires the data from the receiving node based on the tag, or the receiving node determines, based on the tag, the address of the storage space for storing data in the sending node, and acquires data from the sending node based on the address. In a process in which the processor of the receiving node acquires the data, the tag included in the MPI_RECV function is compared with the tags stored in the main memory of the receiving node one by one. As a result, the processor of the receiving node consumes a large amount of computing resources to perform tag matching, reducing utilization of the computing resources of the processor.

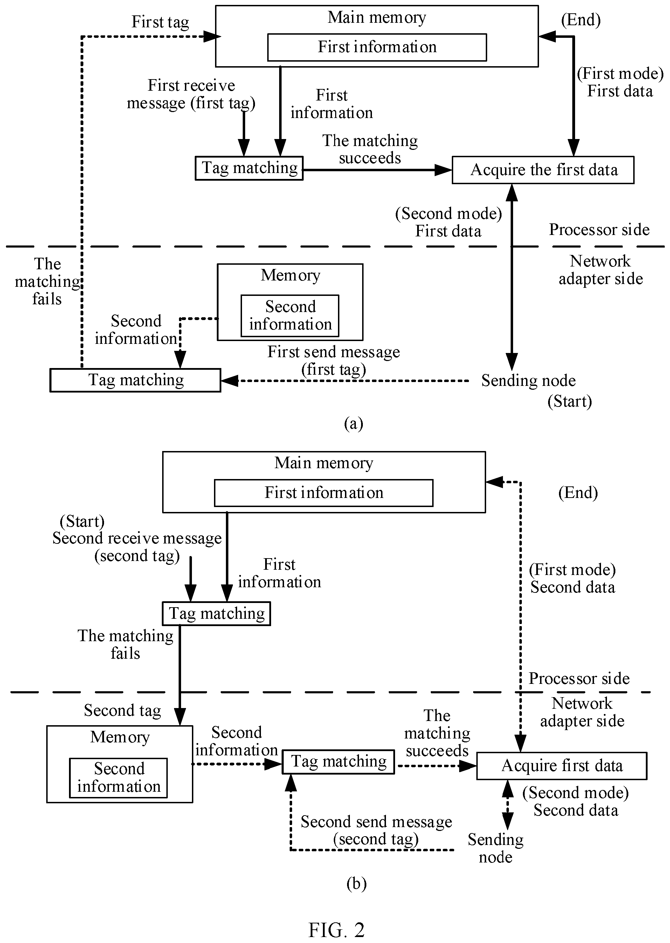

For example, FIG. 2 is a schematic diagram of a data acquisition process provided in the current technology. A receiving node includes a network adapter, a processor, and a main memory. The main memory of the receiving node stores first information. A memory in the network adapter stores second information. The first information includes tags that fail to be matched when the network adapter performs tag matching operations on tags sent by a sending node. The second information indicates tags that fail to be matched when the processor of the receiving node performs tag matching operations on tags generated by the processor.

As shown in (a) in FIG. 2, the network adapter of the receiving node receives a first send message sent by the sending node. The network adapter compares a first tag in the first send message with the tags included in the second information one by one. In this case, assuming that the processor of the receiving node has not generated a first receive message, that is, the processor of the receiving node does not need to acquire first data, and the first tag is not stored in a storage space for storing the second information in the memory, the tag matching fails, and the network adapter stores the first tag and the first data in a storage space for storing the first information in the main memory of the receiving node, or the network adapter stores the first tag in the storage space for storing the first information in the main memory of the receiving node, and stores the first data in another storage space in the memory of the network adapter.

After generating the first receive message, the processor of the receiving node compares the first tag in the first receive message with the tags included in the first information one by one. Before that, if the first tag is stored in the storage space for storing the first information in the main memory, the tag matching succeeds, and the first data of the first send message is acquired based on the first tag.

In a case, if the sending node sends the first data in a first mode, the send message includes the first data, and the processor of the receiving node may acquire the first data from the main memory of the receiving node or from the network adapter of the receiving node. For example, the first mode may be an eager (eager) mode.

In another case, if the sending node sends the first data in a second mode, the send message does not include the first data, but includes an address of a storage space for storing the first data in the sending node. In this case, the processor of the receiving node notifies the network adapter, and the network adapter acquires the first data from the sending node based on the address in the send message. The second mode may be, for example, a rendezvous (rendezvous) mode. After acquiring the first data, the network adapter may send the first data to the processor through a bus for connecting the network adapter to the processor.

As shown in (b) in FIG. 2, after generating a second receive message, the processor of the receiving node compares a second tag included in the second receive message with the tags included in the first information one by one. In this case, assuming that the network adapter of the receiving node has not received a second send message, and the second tag is not stored in the storage space for storing the first information in the main memory, the tag matching fails, and the processor of the receiving node stores the second tag in the storage space for storing the second information in the memory. The tags included in the second information are tags that are generated by the receiving node fails in tag matching.

The network adapter of the receiving node receives the second send message sent by the sending node. The network adapter of the receiving node compares the second tag in the second send message with the tags included in the second information one by one. Before that, if the processor of the receiving node has generated the second receive message, that is, the processor needs to acquire second data, and the second tag is stored in the storage space for storing the second information in the memory, the tag matching succeeds, and the network adapter acquires the second data based on the second tag. The network adapter acquires the second data from the memory, or the network adapter acquires the second data from the sending node based on an address included in the second send message, and sends the second data to the processor.

It can be learned that, in a manner in which the processor of the receiving node acquires data, the processor of the receiving node needs to consume a large amount of computing resources to perform tag matching, and the processor of the receiving node performs a plurality of data interactions with the network adapter. Particularly, as shown in (a) in FIG. 2, the network adapter of the receiving node first receives the data, and then the processor of the receiving node acquires then data. The processor interacts with the network adapter at least twice. As a result, utilization of the computing resources of the processor of the receiving node is reduced, and a data acquisition delay of the processor of the receiving node is long.

According to a data acquisition method provided in embodiments of this application, the first information stored in the main memory may be unloaded to the network adapter, and the memory in the network adapter stores the first information and the second information. After generating the receive message, the processor of the receiving node transmits the tag in the receive message to the network adapter. The network adapter compares the tag in the receive message with the tags included in the first information one by one. If the tag matching succeeds, the data transmitted through the send message is acquired based on the tag, and the data is transmitted to the processor. If the tag matching fails, the tag is stored in the storage space for storing the second information in the memory. In this way, the computing resources of the processor in the receiving node are released, and the computing resources of the processor in the receiving node can process another task, thereby improving utilization of the computing resources of the processor in the receiving node. In addition, the processor of the receiving node does not perform a plurality of data interactions with the network adapter, thereby reducing the data acquisition delay.

The following describes in detail a data acquisition process provided in embodiments of this application with reference to the accompanying drawings.

A data acquisition function of a receiving node may be implemented based on computing resources (for example, a processor) and storage resources (for example, a cache, a memory, or another storage medium) of the node. The computing resources and the storage resources of the node may be virtual resources allocated by a cloud data center, or may be entity physical resources. The following describes possible composition of the computing resources and the storage resources of the node by using an example.

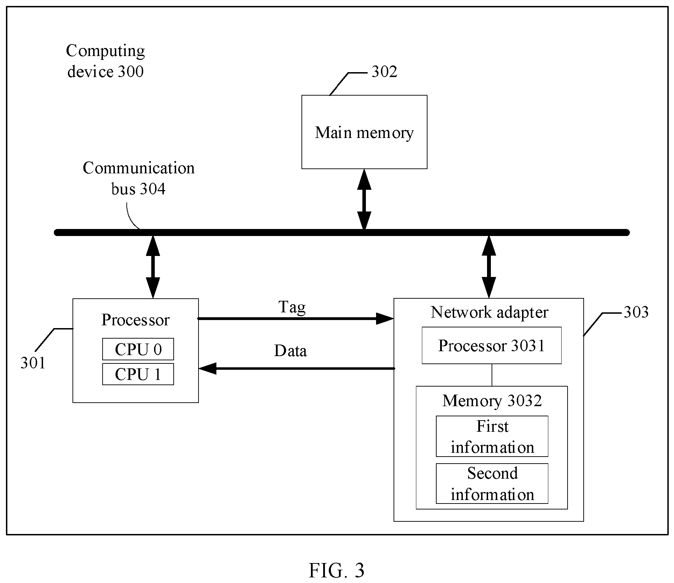

FIG. 3 is a schematic diagram of composition of a computing device according to an embodiment of this application. An example in which the computing device is used as a receiving node is used for description. As shown in FIG. 3, a computing device 300 may include a processor 301, a main memory 302, a network adapter 303, and a communication bus 304. The network adapter 303 includes a processor 3031 and a memory 3032.

The following specifically describes each component of the computing device 300 with reference to FIG. 3.

The processor 301 is a control center of the computing device. Usually, the processor 301 is a CPU, and includes one or more CPU cores, for example, a CPU 0 and a CPU 1 shown in FIG. 3. In addition, the processor 301 may alternatively be an ASIC, or may be configured as one or more integrated circuits, for example, one or more DSPs or one or more FPGAs. The processor 301 may execute various functions of the computing device 300 by running or executing a software program stored in the main memory 302 and invoking data stored in the main memory 302. The computing device 300 may further include a plurality of processors. For example, the computing device 300 may further include an acceleration card, a coprocessor, a graphics processing unit (Graphics Processing Unit, GPU), a neural-network processing unit (Neural-network Processing Unit, NPU), or the like.

The main memory 302 is configured to store a related software program for executing the solutions of this application, and the processor 301 controls an execution of the software program.

In a physical form, the main memory 302 may be a read-only memory (read-only memory, ROM) or another type of static storage device that can store static information and instructions, a random-access memory (random-access memory, RAM) or another type of dynamic storage device that can store information and instructions, or may be an electrically erasable programmable read-only memory (electrically erasable programmable read-only memory, EEPROM), but is not limited thereto. The main memory 302 may exist independently, and is connected to the processor 301 through the communication bus 304. The main memory 302 may alternatively be integrated with the processor 301. This is not limited.

In this embodiment of this application, first information stored in the main memory 302 is unloaded to the network adapter 303, and the memory 3032 in the network adapter 303 stores the first information and second information. After generating a receive message, the processor 301 transmits a tag in the receive message to the network adapter 303. The processor 3031 in the network adapter 303 compares the tag in the receive message with tags included in the first information one by one. If the tag matching succeeds, data transmitted through a send message is acquired based on the tag, and the data is transmitted to the processor 301. If the tag matching fails, the tag is stored in a storage space for storing the second information in the memory 3032. In this way, computing resources of the processor 301 are released, and the computing resources of the processor 301 can process another task, thereby improving utilization of the computing resources of the processor 301. In addition, the processor 301 does not perform a plurality of data interactions with the network adapter 303, thereby reducing a data acquisition delay.

The communication bus 304 may be an ISA bus, a PCI bus, a PCIe bus, an EISA bus, or the like. The bus may be classified into an address bus, a data bus, a control bus, or the like. For ease of description, the bus in FIG. 3 is represented by using only one bold line, but which does not indicate that there is only one bus or one type of bus.

The device structure shown in FIG. 3 constitutes no limitation on the computing device, and may include more or fewer components than those shown in the figure, or some components may be combined, or a different component deployment may be used.

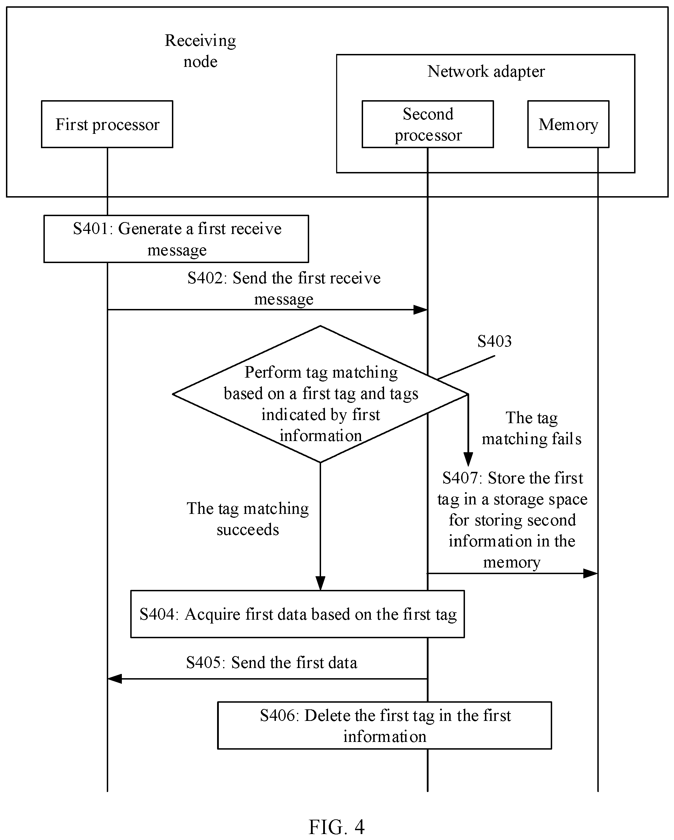

With reference to FIG. 4 to FIG. 8, the following describes in detail a data acquisition method provided in this embodiment of this application. An example in which a first process run by a sending node sends first data and a second process run by a receiving node receives the first data is used for description. The receiving node includes a first processor and a network adapter, and the network adapter includes a second processor and a memory. The first processor may be the processor 301 shown in FIG. 3. The network adapter may be the network adapter 303 shown in FIG. 3. The second processor may be the processor 3031 shown in FIG. 3. The memory may be the memory 3032 shown in FIG. 3. The memory stores first information and second information. Tags included in the first information are tags that are sent by the sending node and received by the receiving node and that fails in tag matching. The tags included in the second information are tags that are generated by the receiving node fails in tag matching.

FIG. 4 is a flowchart of a data acquisition method according to an embodiment of this application. As shown in FIG. 4, the method may include the following steps.

S401: The first processor generates a first receive message.

When the first processor runs, in a process of running the second process, a first MPI_RECV function in the second process, the first receive message is generated based on the first MPI_RECV function. The first receive message includes a first initial address, a first value, a first data type, a first process identifier, a first tag, a first process group identifier, and a status value. The first initial address indicates a location at which the receiving node stores the first data. The first data type indicates a data type of data acquired through the first receive message. The data types include an integer type, a real type, and a character type. The first value indicates a quantity of data types of the data acquired through the first receive message. The first process identifier indicates the first process, and the first process is a process for the sending node to send data. The first tag indicates a first send message sent by the sending node, and the first send message includes the first data or information about the first data. The information about the first data may be an address at which the sending node stores the first data. It may be understood that, the first tag may alternatively refer to the first data that needs to be acquired by the first receive message. The first process group identifier indicates a process group identifier of a process group to which the first process sending the first send message belongs. The first process group identifier and the first process identifier uniquely identify the first process. The status value is used to notify the sending node of whether the first receive message is correctly received or not.

S402: The first processor sends the first receive message to the network adapter.

The first processor may send a complete first receive message to the network adapter, or the first processor may send partial information in the first receive message to the network adapter.

For example, the first processor may send the first tag in the first receive message to the network adapter, so that the second processor of the network adapter compares the first tag with the tags included in the first information. The first tag may be a tag defined in the first MPI_RECV function, or the first tag may be a tag acquired after a hash operation is performed on a process identifier, a tag, and a process group identifier that are defined in the first MPI_RECV function. In this way, the tag acquired after the hash operation can improve security of the tag and avoid leakage of information such as the tag.

For another example, the first processor may send the first process identifier, the first tag, and the first process group identifier in the first receive message to the network adapter. The first process identifier, the first tag, and the first process group identifier in the first receive message may be the process identifier, the tag, and the process group identifier defined in the first MPI_ RECV function.

S403: The second processor of the network adapter performs tag matching based on the first tag and the tags indicated by the first information.

After the network adapter receives the first tag transmitted by the first processor, the second processor of the network adapter compares the first tag with the tags included in the first information one by one, to determine whether the first information includes a tag the same as the first tag.

If the tag matching succeeds, it indicates that the first tag is stored in a storage space for storing the first information in the memory, and the network adapter has received the first send message sent by the sending node, that is, the network adapter has received the first data from the sending node. The second processor of the network adapter performs S404 to S406.

If the tag matching fails, it indicates that the first tag is not stored in the storage space for storing the first information in the memory, and the network adapter has not received the first data from the sending node. The second processor of the network adapter performs S407.

In some embodiments, the tags included in the first information may be tags that are defined in a first MPI_SEND function and sent by the sending node. The first tag received by the network adapter from the first processor may be the tag defined in the first MPI_RECV function. After the network adapter receives the first tag from the first processor, the second processor of the network adapter may compare the first tag with the tags included in the first information.

In some other embodiments, the tags included in the first information may be tags acquired after the sending node performs a hash operation based on a process identifier, a tag, and a process group identifier that are defined in the first MPI_SEND function. The first processor may acquire the first tag after a hash operation is performed on the process identifier, the tag, and the process group identifier that are defined in the first MPI_RECV function. After the network adapter receives the first tag from the first processor, the second processor of the network adapter may compare the first tag with the tags included in the first information. Alternatively, the network adapter receives the process identifier, the tag, and the process group identifier that are defined in the first MPI_RECV function from the first processor, and the second processor of the network adapter compares the first tag with the tags included in the first information, where the first tag is acquired after a hash operation is performed on the process identifier, the tag, and the process group identifier that are defined in the first MPI_RECV function.

Optionally, when the sending node and the receiving node perform a hash operation on the tag, the process identifier may be a process identifier of a source process or a process identifier of a destination process, which is not limited.

It should be noted that, before the second processor of the network adapter compares the first tag with the tags included in the first information, the network adapter controls an execution of a tag writing operation on the first information and the second information. Specifically, the second processor of the network adapter may forbid the execution of a tag writing operation on the first information included in the memory of the network adapter, to avoid abnormal tag matching success or matching failure in a tag matching operation due to a case that the network adapter receives another tag and performs a tag writing operation on the first information when the network adapter performs a tag matching operation, thereby improving reliability of the tag matching. In addition, a tag writing operation is forbidden to be executed on the second information included in the memory of the network adapter, to avoid abnormal tag matching success or matching failure in a tag matching operation due to a case that the network adapter receives another tag and performs a tag writing operation on the second information when the network adapter performs a tag matching operation, thereby improving reliability of the tag matching.

Compared with a tag matching operation performed by the first processor (such as the processor 301) of the receiving node, in a method provided in this embodiment of this application, the tag matching operation is unloaded to the network adapter, and the network adapter performs the tag matching operation, so that computing resources of the first processor in the receiving node are released, and the computing resources of the first processor in the receiving node can process another task, thereby improving utilization of the computing resources of the first processor in the receiving node. In addition, the first processor of the receiving node does not perform a plurality of data exchanges with the network adapter, thereby reducing the data acquisition delay.

S404: The second processor of the network adapter acquires the first data based on the first tag.

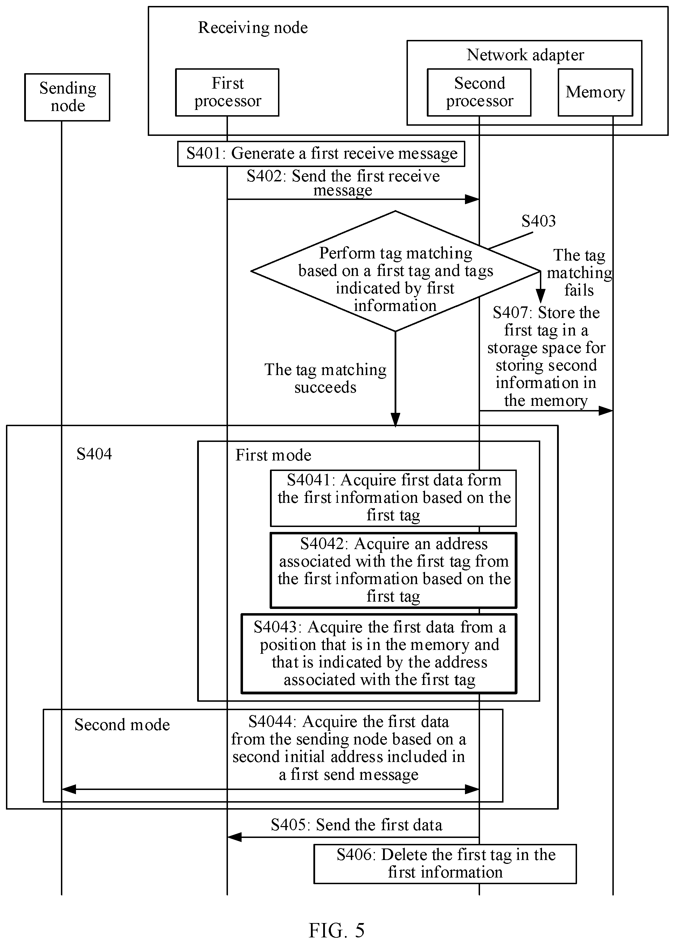

In a possible implementation, if a data amount of the first data is small, the sending node sends the first send message in a first mode, where the first send message includes the first data. After receiving the first send message, the network adapter may store the first data included in the first send message in the memory of the network adapter, and the second processor of the network adapter may locally acquire the first data. As shown in FIG. 5, a method for the second processor of the network adapter to locally acquire the first data includes the following steps S4041, or S4042 and S4043.

For example, the first information includes a correspondence between the first tag and the first send message. The second processor of the network adapter performs S4041, that is, the second processor of the network adapter acquires the first data from the first information based on the first tag.

For another example, the first information includes a correspondence between the first tag and the address associated with the first tag, and the address associated with the first tag indicates the storage space in the memory of the network adapter. The second processor of the network adapter performs S4042 and S4043, that is, the second processor of the network adapter acquires the address associated with the first tag from the first information based on the first tag, and acquires the first data based on a location that is in the memory and that is indicated by the address associated with the first tag.

Optionally, the first send message may further include a first identifier, and the first identifier indicates the sending node to send data in the first mode, that is, the first send message includes the first data. The first information may include a correspondence between the first tag and the first identifier. The second processor of the network adapter may acquire the first identifier based on the first tag, and determine, based on the first identifier, that the sending node sends the first data in the first mode, and the second processor of the network adapter locally acquires the first data.

In another possible implementation, if the data amount of the first data is large, the sending node sends the first send message in a second mode, where the first send message does not include the first data. The second processor of the network adapter may acquire the first data from the sending node. As shown in FIG. 5, a method for the second processor of the network adapter to acquire the first data from the sending node includes step S4044, that is, the second processor of the network adapter acquires the first data from the sending node based on a second initial address included in the first send message. For example, the second processor of the network adapter acquires the first data from the sending node using a remote direct memory access (remote direct memory access, RDMA) technology. The second initial address indicates an address of a storage space for storing the first data in the sending node.

For example, the first information includes the correspondence between the first tag and the first send message, and the second processor of the network adapter may acquire the first send message from the first information based on the first tag, and acquire the first data from the sending node based on the second initial address included in the first send message.

For another example, the first information includes the correspondence between the first tag and the address associated with the first tag, and the address associated with the first tag indicates the storage space in the memory of the network adapter. The second processor of the network adapter may acquire the address associated with the first tag from the first information based on the first tag, and acquire the first send message based on the location that is in the memory of the network adapter and that is indicated by the address associated with the first tag. The second processor of the network adapter acquires the first data from the sending node based on the second initial address included in the first send message.

For another example, the first information includes a correspondence between the first tag and the second initial address included in the first send message, and the second processor of the network adapter acquires, from the first information based on the first tag, the second initial address included in the first send message, and acquires the first data from the sending node based on the second initial address.

Optionally, the first send message may further include a second identifier, and the second identifier indicates the sending node to send data in the second mode, that is, the first send message does not include the first data. The first information may include a correspondence between the first tag and the second identifier. The second processor of the network adapter may acquire the second identifier based on the first tag, and determine, based on the second identifier, that the sending node sends the first data in the second mode, and the second processor of the network adapter may acquire the first data from the sending node. It may be understood that, the second identifier indicates the receiving node to acquire the first data from the sending node.

S405: The second processor of the network adapter sends the first data to the first processor.

S406: The second processor of the network adapter deletes the first tag in the first information.

In this way, the tag sent by the sending node occupies less storage space of the memory of the network adapter, and storage efficiency of the memory of the network adapter is improved.

S407: The second processor of the network adapter stores the first tag in a storage space for storing the second information in the memory.

In this way, after receiving the first send message from the sending node, the network adapter matches the tag included in the first send message with the first tag in the second information, to acquire the first data.

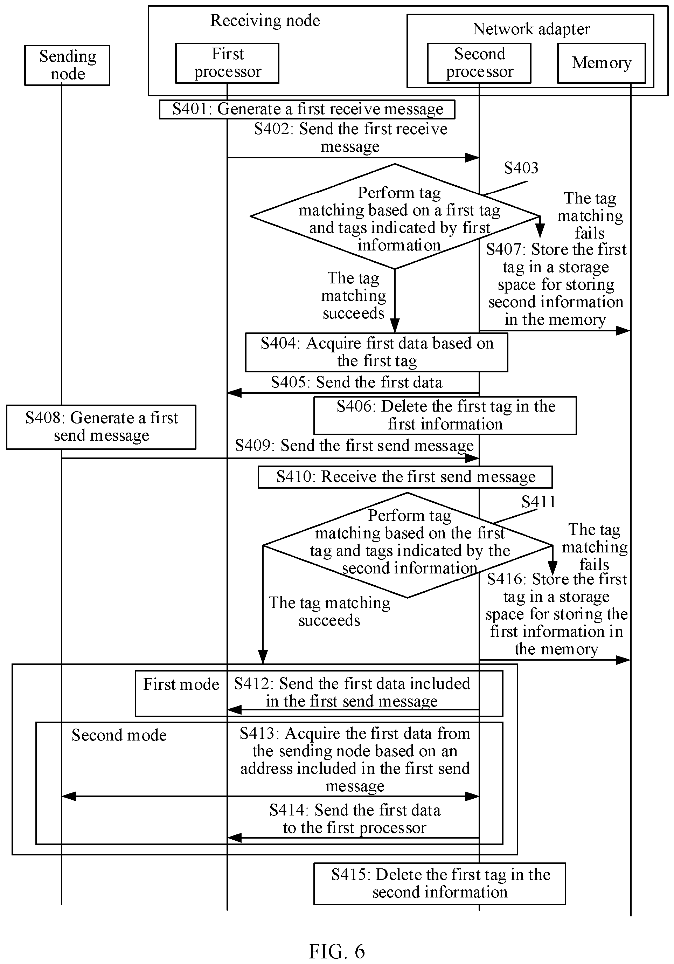

A same pair of source process and destination process use a same tag to indicate a send message including data when performing data interactions. Therefore, the first tag may be generated by the receiving node or may be sent by the sending node. The foregoing S401 to S407 describe a process in which the first processor of the receiving node performs tag matching after generating the first tag. Further, after the network adapter of the receiving node receives the send message sent by the sending node, the second processor performs tag matching on the first tag included in the send message, so that the network adapter processes the data included in the send message. As shown in FIG. 6, the method further includes the following steps S408 to S416.

S408: The sending node generates the first send message.

When the sending node runs, in a process of running the first process, the first MPI_SEND function, the first send message is generated based on the first MPI_SEND function. The first send message includes the second initial address, a second value, a second data type, a second process identifier, the first tag, and a second process group identifier. The second initial address indicates a location at which the sending node stores the first data. The second data type indicates a data type of the data acquired through the first send message. The second value indicates a quantity of data types of the data acquired through the first send message. The second process identifier indicates the second process, and the second process is a process for the receiving node to receive data. The first tag indicates the first send message sent by the sending node. The second process group identifier indicates a process group identifier of a process group to which the second process generating the first receive message belongs. The second process group identifier and the second process identifier uniquely identify the second process. The first process group identifier and the second process group identifier may be the same or may be different. If the first process group identifier is the same as the second process group identifier, it indicates that the first process and the second process belong to a same process group. If the first process group identifier is different from the second process group identifier, it indicates that the first process and the second process belong to different process groups.

S409: The sending node sends the first send message to the network adapter.

After generating the first send message, the sending node may encapsulate the first send message to generate a data packet suitable for network transmission. The sending node may transmit the data packet to the receiving node through a network.

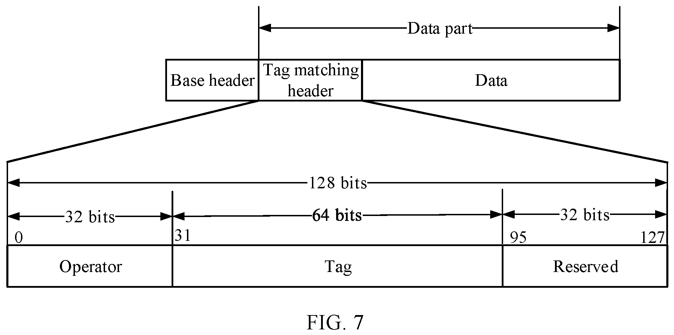

For example, FIG. 7 is a schematic diagram of a structure of a data packet according to an embodiment of this application. The data packet includes a base header and a data part. The base header includes information about the transmitted data packet. For example, the base header may include an Internet Protocol (Internet Protocol, IP) address and a media access control (Media Access Control, MAC) address. The data part is a valid payload of the data packet. The data part includes a tag matching header (tag matching header, TMH) and data. The tag matching header includes an operator field, a tag field, and a reserved field. The tag matching header may occupy 128 bits in the data part. The operator field may occupy 32 bits in the tag matching header. The tag field may occupy 64 bits in the tag matching header. The reserved field may occupy 32 bits in the tag matching header.

When a value of the operator field is 0, it indicates that the receiving node does not need to perform tag matching. When a value of the operator field is 1, it indicates that the sending node sends data in the second mode. When a value of the operator field is 2, it indicates that the sending node ends sending data in the second mode. When a value of the operator field is 3, it indicates that the sending node sends data in the first mode. The tag field may include the tag defined in the first MPI_SEND function, or may include the tag acquired after a hash operation is performed on the process identifier, the tag, and the process group identifier defined in the first MPI_SEND function. The reserved field may be an optional field.

It should be noted that, the sending node may compare a length value of the first data with a preset threshold. If the length value of the first data is greater than or equal to the preset threshold, the sending node sends the first data in the second mode, and the data part does not include the first data. If the length value of the first data is less than the preset threshold, the sending node sends the first data in the first mode, and the data part includes the first data. The preset threshold may be preconfigured based on a service requirement.

S410: The network adapter receives the first send message sent by the sending node.

S411: The second processor of the network adapter performs tag matching based on the first tag and the tags indicated by the second information.

After the network adapter receives the first tag from the sending node, the second processor of the network adapter compares the first tag with the tags included in the second information one by one, to determine whether the second information includes a tag the same as the first tag.

If the tag matching succeeds, it indicates that the first tag is stored in the storage space for storing the second information in the memory, and the second processor of the network adapter acquires the first data associated with the first tag. Specifically, the second processor of the network adapter performs S412 and S415, or performs S413, S414, and S415.

If the tag matching fails, it indicates that the first tag is not stored in the storage space for storing the second information in the memory, and the second processor of the network adapter cannot acquire the first data associated with the first tag, and waits for the network adapter to receive the first data sent by the sending node. Further, the second processor of the network adapter performs S416.

Compared with a tag matching operation performed by the first processor (such as the processor 301) of the receiving node, in a method provided in this embodiment of this application, the tag matching operation is unloaded to the network adapter, and the network adapter performs the tag matching operation, so that computing resources of the first processor in the receiving node are released, and the computing resources of the first processor in the receiving node can process another task, thereby improving utilization of the computing resources of the first processor in the receiving node. In addition, the first processor of the receiving node does not perform a plurality of data exchanges with the network adapter, thereby reducing the data acquisition delay.

S412: The second processor of the network adapter sends the first data included in the first send message to the first processor.

S413: The second processor of the network adapter acquires the first data from the sending node based on the address included in the first send message.

Specifically, the second processor of the network adapter acquires the first data from the sending node based on the second initial address included in the first send message.

S414: The second processor of the network adapter sends the first data to the first processor.

The address included in the first send message indicates the location at which the sending node stores the first data.

S415: The second processor of the network adapter deletes the first tag in the second information.

In this way, the tag sent by the sending node occupies less storage space of the memory of the network adapter, and storage efficiency of the memory of the network adapter is improved.

S416: The second processor of the network adapter stores the first tag in the storage space for storing the first information in the memory.

For example, the sending node sends the first send message in the first mode, and the second processor of the network adapter stores the first tag and the first data that are included in the first send message in the storage space for storing the first information in the memory; or the second processor of the network adapter stores the first data included in the first send message in the memory of the network adapter, and stores the address at which the network adapter stores the first data in the storage space for storing the first information in the memory. For another example, the sending node sends the first send message in the second mode, and the second processor of the network adapter stores the first tag and the second initial address that are included in the first send message in the storage space for storing the first information in the memory.

After the second processor of the network adapter stores the first tag in the storage space for storing the first information in the memory, and the first processor generates the first receive message, the second processor of the network adapter compares the first tag included in the first receive message with the tags included in the first information, to acquire the first data. For details, refer to the descriptions of S401 to S407.

In some other embodiments, the memory of the network adapter stores the first information and the second information. A second send message received by the network adapter from the sending node includes a second tag. The second processor of the network adapter compares the second tag in the second send message with the tags included in the second information one by one. If the tag matching succeeds, second data of the second send message is acquired based on the second tag, and the second data is transmitted to the first processor. If the tag matching fails, the second tag is stored in the storage space for storing the first information in the memory.

After generating a second receive message, the first processor transmits the second tag in the second receive message to the network adapter. The second processor of the network adapter compares the second tag in the second receive message with the tags included in the first information one by one. If the tag matching succeeds, the second data of the second send message is acquired based on the second tag, and the second data is transmitted to the first processor. If the tag matching fails, the second tag is stored in the storage space for storing the second information in the memory. For a specific tag matching process, refer to the descriptions in the foregoing embodiment. Details are not described again.

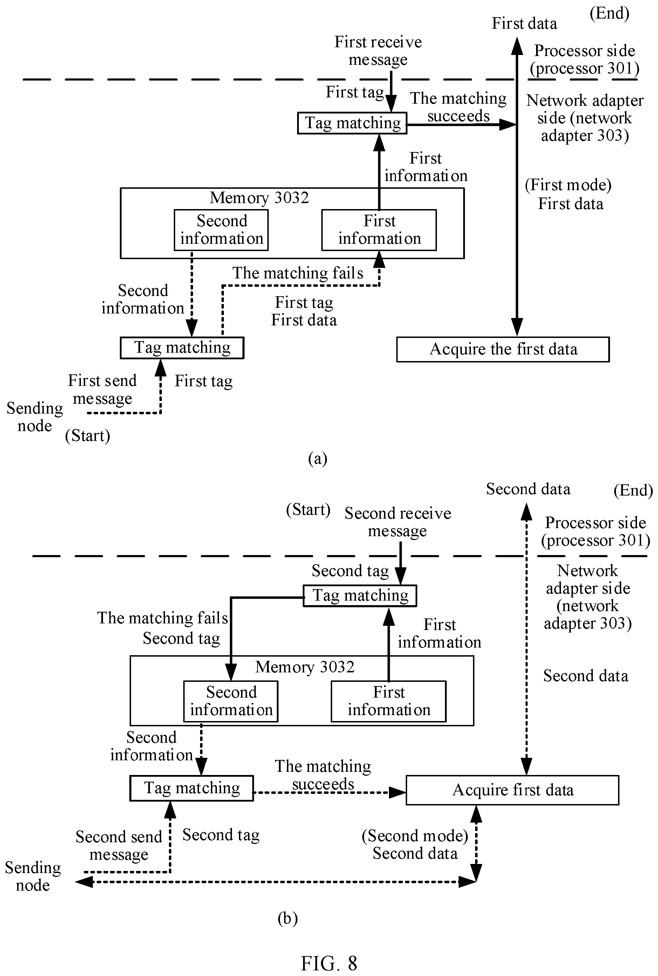

The following describes a data acquisition process by using an example. FIG. 8 is a schematic diagram of a data acquisition process according to an embodiment of this application. The processor 301 and the network adapter 303 in the computing device 300 shown in FIG. 3 are used as examples for description. The memory 3032 in the network adapter 303 stores first information and second information. It is assumed that a sending node sends a first send message including first data in a first mode, and the sending node sends a second send message in a second mode.

As shown in (a) in FIG. 8, the network adapter 303 receives the first send message from the sending node. The network adapter 303 compares a first tag in the first send message with tags included in the second information one by one. In this case, assuming that the processor 301 has not generated a first receive message, that is, the processor 301 does not need to acquire first data, and the first tag is not stored in a storage space for storing the second information in the memory, the tag matching fails, and the network adapter 303 stores the first tag and the first data in a storage space for storing the first information in the memory, or stores the first data in another storage space in the memory 3032.

After generating the first receive message, the processor 301 transmits the first tag in the first receive message to the network adapter 303, and the network adapter 303 compares the first tag in the first receive message with tags included in the first information one by one. Before that, if the first tag is stored in the storage space for storing the first information in the memory, the tag matching succeeds, the first data of the first send message is acquired based on the first tag, and the first data is transmitted to the processor 301.

As shown in (b) in FIG. 8, after generating a second receive message, the processor 301 transmits a second tag in the second receive message to the network adapter 303, and the network adapter 303 compares the second tag with the tags included in the first information one by one. In this case, assuming that the network adapter 303 has not received the second send message, and the second tag is not stored in the storage space for storing the first information in the memory, the tag matching fails, and the second tag is stored in the storage space for storing the second information in the memory.

The network adapter 303 receives the second send message from the sending node. The network adapter 303 compares the second tag in the second send message with the tags included in the second information one by one. Before that, if the processor 301 has generated the second receive message, that is, the processor 301 needs to acquire second data, and the second tag is stored in the storage space for storing the second information in the memory, the tag matching succeeds, and the network adapter 303 acquires the second send message based on the second tag, acquires the second data from the sending node based on an address included in the second send message, and transmits the second data to the processor 301.

In this way, computing resources of the main processor (such as the processor 301) in the receiving node are released, and the computing resources of the main processor in the receiving node can process another task, thereby improving utilization of the computing resources of the main processor in the receiving node. In addition, especially when the network adapter of the receiving node first receives data, and then the main processor of the receiving node acquires the data, a quantity of data exchanges between the main processor of the receiving node and the network adapter is effectively reduced, and a data acquisition delay is reduced.

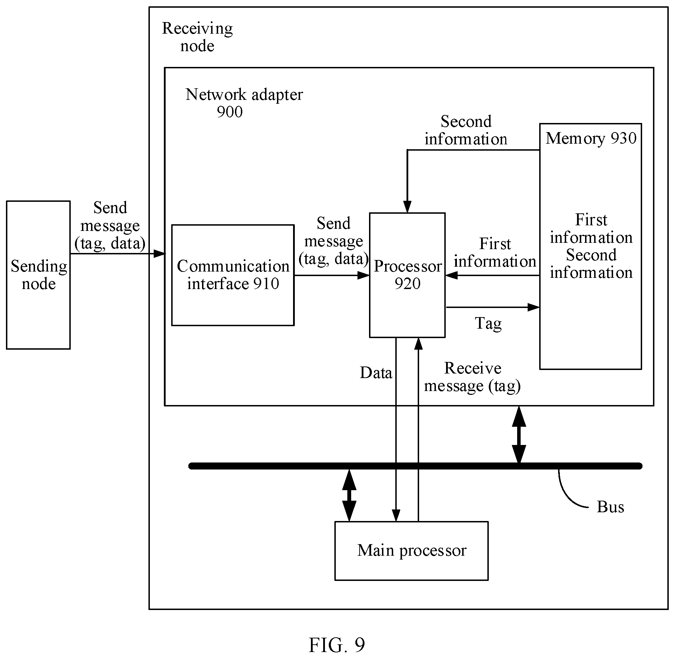

FIG. 9 is a schematic diagram of a possible structure of a network adapter according to an embodiment. The network adapter may be configured to implement functions of the network adapter in the receiving node in the foregoing method embodiment, and therefore can also achieve beneficial effects of the foregoing method embodiment.

As shown in FIG. 9, a receiving node includes a network adapter 900 and a main processor. The network adapter 900 is connected to the main processor through a bus. The network adapter 900 interacts data with the main processor through the bus. The bus may be an ISA bus, a PCI bus, a PCIe bus, an EISA bus, or the like.

The network adapter 900 includes a communication interface 910, a processor 920, and a memory 930. The communication interface 910 is configured to receive a send message sent by a sending node. The send message may include a tag and data. The processor 920 is configured to compare a tag in a receive message generated by the main processor with tags included in first information. If the tag matching succeeds, data corresponding to the tag is sent to the main processor through the bus. If the tag matching fails, the tag is stored in a storage space for storing second information in the memory 930. The processor 920 is further configured to compare the tag in the send message with tags included in the second information. If the tag matching fails, the tag is stored in a storage space for storing the first information in the memory 930. If the tag matching succeeds, data corresponding to the tag is sent to the main processor through the bus. The memory 930 is configured to store the first information and the second information. Specifically, the network adapter 900 is configured to implement functions of the network adapter in the receiving node in the method embodiment shown in FIG. 4, FIG. 5, or FIG. 6.

It should be understood that, the network adapter 900 in this embodiment of this application may be implemented by an ASIC or a programmable logic device (programmable logic device, PLD). The PLD may be a complex program logic device (complex programmable logic device, CPLD), an FPGA, a generic array logic (generic array logic, GAL), or any combination thereof. Alternatively, when the method shown in FIG. 4, FIG. 5, or FIG. 6 is implemented by software, the network adapter 900 and modules thereof may be software modules.

For more detailed descriptions of the foregoing communication interface 910, processor 920, and memory 930, directly refer to related descriptions in the method embodiment shown in FIG. 4, FIG. 5, or FIG. 6. Details are not described herein again.

The method steps in this embodiment may be implemented in a hardware manner, or may be implemented by executing software instructions by a processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a computing device. Certainly, the processor and the storage medium may alternatively exist in the computing device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions described in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A network adapter (303, 900) for a receiving node (121, 122), wherein the network adapter comprises a first processor (3031, 920) and a memory (3032, 930), wherein
the memory (3032, 930) is configured to store a computer-readable program and first information; and
the first processor is configured to execute the computer-readable program in the memory (3032, 930), to enable the network adapter to perform the following operations:
performing (S403) tag matching based on a first tag and a tag comprised in the first information,
wherein the tag comprised in the first information failed in tag matching performed by the network adapter and indicates a first send message sent by a sending node (111, 112), the first send message comprises first data or information about the first data, and
wherein the first tag is acquired from a first receive message generated by a second processor (301) which is in the receiving node (121, 122) comprising the network adapter; and
if the tag matching succeeds, sending the first data to the second processor (301).

2. The network adapter (303, 900) according to claim 1, wherein the memory (3032, 930) is further configured to store second information, the second information comprises a tag that is acquired from the second processor (301) and that fails in tag matching performed by the network adapter, and the operations performed by the network adapter further comprise:
if the tag matching fails, storing the first tag in a storage space for storing the second information in the memory (3032, 930).

3. The network adapter (303, 900) according to claim 1, wherein the second processor (301) is connected to the network adapter (303, 900) through a bus, the network adapter is configured to receive, through the bus, the first tag sent by the second processor (301), and the network adapter is configured to send the first data to the second processor (301) through the bus.

4. The network adapter (303, 900) according to any one of claims 1 to 3, wherein the first send message is transmitted, through a network (120, 120c, 130, 160), by a source process run by the sending node (111, 112) to a destination process run by the receiving node (121, 122).

5. The network adapter (303, 900) according to any one of claims 1 to 4, wherein the receiving node (121, 122) and the sending node (111, 112) communicate with each other through a message passing interface, MPI.

6. The network adapter (303, 900) according to any one of claims 1 to 5, wherein if the tag matching succeeds, the operations performed by the network adapter further comprise:
acquiring the first data from the first information based on the first tag, wherein the first information comprises the first data; or
acquiring the first data based on the information about the first data associated with the first tag, wherein the information about the first data indicates information about an address at which the first data is stored.

7. The network adapter (303, 900) according to claim 6, wherein the acquiring the first data based on the address associated with the first tag comprises:
acquiring the first data from a storage space that is in the memory (3032, 930) and that is indicated by the address associated with the first tag.

8. The network adapter (303, 900) according to claim 6, wherein the acquiring the first data based on the address associated with the first tag comprises:
acquiring the first data from a storage space that is in the sending node and that is indicated by the address associated with the first tag.

9. The network adapter (303, 900) according to any one of claims 6 to 8, wherein the operations performed by the network adapter further comprise:
deleting the first tag in the first information.

10. The network adapter (303, 900) according to any one of claims 2 + to 9, wherein the memory (3032, 930) further stores the second information, the second information comprises the tag that is acquired from the second processor and that fails in tag matching performed by the network adapter, and the operations performed by the network adapter further comprise:
performing tag matching based on a second tag and the tag comprised in the second information, wherein the second tag indicates a second send message sent by the sending node, the second send message comprises second data or information about the second data, and the second tag is acquired from the second send message that is sent by the sending node and received by the network adapter through the network (120, 120c, 130, 160); and
if the tag matching fails, storing the second tag in a storage space for storing the first information in the memory (3032, 930).

11. The network adapter (303, 900) according to any one of claims 2 to 10, wherein the operations performed by the network adapter further comprise:
controlling an execution of a tag writing operation on the first information and the second information.

12. A computing device, wherein the computing device comprises the second processor (301) and the network adapter (303, 900) according to any one of claims 1 to 11, the second processor and the network adapter are connected through a bus, and the second processor and the network adapter transmit a tag and data through the bus.

13. A data acquisition method, wherein the method is performed by a network adapter (303, 930) according to one of the preceeding claims comprised in a receiving node (121, 122), comprising:
performing (S403) tag matching based on a first tag and a tag indicated by first information,
wherein the tag comprised in the first information failed in tag matching performed by the network adapter and indicates a first send message sent by a sending node (111, 112), the first send message comprises first data or information about the first data, and
wherein the first tag is acquired from a fist receive message generated by a second processor (301) which is in the receiving node (121, 122), and the sending node communicate with each other through a message passing interface MPI; and
if the tag matching succeeds, sending the first data to the second processor.

14. The method according to claim 13, wherein a memory (3032, 930) of the network adapter further stores second information, the second information comprises a tag that is acquired from the second processor and that fails in tag matching performed by the network adapter, and the method further comprises:
if the tag matching fails, storing the first tag in a storage space for storing the second information in the memory (3032, 930).

15. The method according to claim 14, wherein the memory (3032, 930) of the network adapter further stores the second information, the second information comprises the tag that is acquired from the second processor and that fails in tag matching performed by the network adapter, and the method further comprises:
performing tag matching based on a second tag and the tag comprised in the second information, wherein the second tag indicates a second send message sent by the sending node, the second send message comprises second data or information about the second data, and the second tag is acquired from the second send message that is sent by the sending node and received by the network adapter through a network (120, 120c, 130, 160); and
if the tag matching fails, storing the second tag in a storage space for storing the first information in the memory (3032, 930).

## Patentansprüche

1. Netzwerkadapter (303, 900) für einen Empfangsknoten (121, 122), wobei der Netzwerkadapter einen ersten Prozessor (3031, 920) und einen Speicher (3032, 930) umfasst, wobei
der Speicher (3032, 930) dazu konfiguriert ist, ein computerlesbares Programm und erste Informationen zu speichern; und
der erste Prozessor dazu konfiguriert ist, das computerlesbare Programm in dem Speicher (3032, 930) auszuführen, um den Netzwerkadapter in die Lage zu versetzen, die folgenden Operationen durchzuführen:
Durchführen (S403) eines Markierungsabgleichs basierend auf einer ersten Markierung und einer Markierung, die in den ersten Informationen enthalten ist,
wobei die in den ersten Informationen enthaltene Markierung bei einem Markierungsabgleich, der durch den Netzwerkadapter durchgeführt wird, fehlgeschlagen ist und eine erste Sendenachricht, die durch einen Sendeknoten (111, 112) gesendet wird, anzeigt, die erste Sendenachricht erste Daten oder Informationen über die ersten Daten umfasst, und
wobei die erste Markierung von einer ersten Empfangsnachricht erfasst wird, die durch einen zweiten Prozessor (301) generiert wird, welcher in dem Empfangsknoten (121, 122) umfassend den Netzwerkadapter vorliegt; und
wenn der Markierungsabgleich erfolgreich ist, Senden der ersten Daten an den zweiten Prozessor (301).

2. Netzwerkadapter (303, 900) nach Anspruch 1, wobei der Speicher (3032, 930) ferner dazu konfiguriert ist, zweite Informationen zu speichern, die zweiten Informationen eine Markierung umfassen, die aus dem zweiten Prozessor (301) erfasst wird und die bei einem Markierungsabgleich, der durch den Netzwerkadapter durchgeführt wird, fehlschlägt, und die Operationen, die durch den Netzwerkadapter durchgeführt werden, ferner Folgendes umfassen:
wenn der Markierungsabgleich fehlschlägt, Speichern der ersten Markierung in einem Speicherplatz zum Speichern der zweiten Informationen in dem Speicher (3032, 930).

3. Netzwerkadapter (303, 900) nach Anspruch 1, wobei der zweite Prozessor (301) über einen Bus mit dem Netzwerkadapter (303, 900) verbunden ist, der Netzwerkadapter dazu konfiguriert ist, über den Bus die erste Markierung zu empfangen, die durch den zweiten Prozessor (301) gesendet wird, und der Netzwerkadapter dazu konfiguriert ist, die ersten Daten über den Bus an den zweiten Prozessor (301) zu senden.

4. Netzwerkadapter (303, 900) nach einem der Ansprüche 1 bis 3, wobei die erste Sendenachricht über ein Netzwerk (120, 120c, 130, 160) durch einen Quellprozess, der durch den Sendeknoten (111, 112) ausgeführt wird, zu einem Zielprozess, der durch den Empfangsknoten (121, 122) ausgeführt wird, übertragen wird.

5. Netzwerkadapter (303, 900) nach einem der Ansprüche 1 bis 4, wobei der Empfangsknoten (121, 122) und der Sendeknoten (111, 112) über eine Message-Passing-Schnittstelle (message passing interface - MPI) miteinander kommunizieren.

6. Netzwerkadapter (303, 900) nach einem der Ansprüche 1 bis 5, wobei, wenn der Markierungsabgleich erfolgreich ist, die Operationen, die durch den Netzwerkadapter durchgeführt werden, ferner Folgendes umfassen:
Erfassen der ersten Daten aus den ersten Informationen basierend auf der ersten Markierung, wobei die ersten Informationen die ersten Daten umfassen; oder
Erfassen der ersten Daten basierend auf den Informationen über die ersten Daten, die mit der ersten Markierung assoziiert sind, wobei die Informationen über die ersten Daten Informationen über eine Adresse anzeigen, an welcher die ersten Daten gespeichert sind.

7. Netzwerkadapter (303, 900) nach Anspruch 6, wobei das Erfassen der ersten Daten basierend auf der Adresse, die mit der ersten Markierung assoziiert ist, Folgendes umfasst:
Erfassen der ersten Daten aus einem Speicherplatz, der in dem Speicher (3032, 930) vorliegt und der durch die Adresse, die mit der ersten Markierung assoziiert ist, angezeigt wird.

8. Netzwerkadapter (303, 900) nach Anspruch 6, wobei das Erfassen der ersten Daten basierend auf der Adresse, die mit der ersten Markierung assoziiert ist, Folgendes umfasst:
Erfassen der ersten Daten aus einem Speicherplatz, der in dem Sendeknoten vorliegt und der durch die Adresse, die mit der ersten Markierung assoziiert ist, angezeigt wird.

9. Netzwerkadapter (303, 900) nach einem der Ansprüche 6 bis 8, wobei die Operationen, die durch den Netzwerkadapter durchgeführt werden, ferner Folgendes umfassen:
Löschen der ersten Markierung in den ersten Informationen.

10. Netzwerkadapter (303, 900) nach einem der Ansprüche 2 bis 9, wobei der Speicher (3032, 930) ferner die zweiten Informationen speichert, die zweiten Informationen die Markierung umfassen, die aus dem zweiten Prozessor erfasst wird und die bei einem Markierungsabgleich, der durch den Netzwerkadapter durchgeführt wird, fehlschlägt, und die Operationen, die durch den Netzwerkadapter durchgeführt werden, ferner Folgendes umfassen:
Durchführen eines Markierungsabgleichs basierend auf einer zweiten Markierung und der Markierung, die in den zweiten Informationen enthalten ist, wobei die zweite Markierung eine zweite Sendenachricht anzeigt, die durch den Sendeknoten gesendet wird, die zweite Sendenachricht zweite Daten oder Informationen über die zweiten Daten umfasst und die zweite Markierung aus der zweiten Sendenachricht erfasst wird, die durch den Sendeknoten gesendet und über das Netzwerk (120, 120c, 130, 160) durch den Netzwerkadapter empfangen wird; und
wenn der Markierungsabgleich fehlschlägt, Speichern der zweiten Markierung in einem Speicherplatz zum Speichern der ersten Informationen in dem Speicher (3032, 930).

11. Netzwerkadapter (303, 900) nach einem der Ansprüche 2 bis 10, wobei die Operationen, die durch den Netzwerkadapter durchgeführt werden, ferner Folgendes umfassen:
Steuern einer Ausführung einer Markierungsschreiboperation für die ersten Informationen und die zweiten Informationen.

12. Rechenvorrichtung, wobei die Rechenvorrichtung den zweiten Prozessor (301) und den Netzwerkadapter (303, 900) nach einem der Ansprüche 1 bis 11 umfasst, der zweite Prozessor und der Netzwerkadapter über einen Bus verbunden sind und der zweite Prozessor und der Netzwerkadapter über den Bus eine Markierung und Daten übertragen.

13. Datenerfassungsverfahren, wobei das Verfahren durch einen Netzwerkadapter (303, 930) nach einem der vorhergehenden Ansprüche durchgeführt wird, der in einem Empfangsknoten (121, 122) enthalten ist, umfassend:
Durchführen (S403) eines Markierungsabgleichs basierend auf einer ersten Markierung und einer Markierung, die durch die ersten Informationen angezeigt wird,
wobei die in den ersten Informationen enthaltene Markierung bei einem Markierungsabgleich, der durch den Netzwerkadapter durchgeführt wird, fehlgeschlagen ist und eine erste Sendenachricht, die durch einen Sendeknoten (111, 112) gesendet wird, anzeigt, die erste Sendenachricht erste Daten oder Informationen über die ersten Daten umfasst, und
wobei die erste Markierung aus einer ersten Empfangsnachricht erfasst wird, die durch einen zweiten Prozessor (301) generiert wird, welcher in dem Empfangsknoten (121, 122) vorliegt, und der Sendeknoten über eine Message-Passing-Schnittstelle MPI miteinander kommuniziert; und
wenn der Markierungsabgleich erfolgreich ist, Senden der ersten Daten an den zweiten Prozessor.

14. Verfahren nach Anspruch 13, wobei ein Speicher (3032, 930) des Netzwerkadapters ferner zweite Informationen speichert, die zweiten Informationen eine Markierung umfassen, die aus dem zweiten Prozessor erfasst wird und die bei dem Markierungsabgleich, der durch den Netzwerkadapter durchgeführt wird, fehlschlägt, und das Verfahren ferner Folgendes umfasst: wenn der Markierungsabgleich fehlschlägt, Speichern der ersten Markierung in einem Speicherplatz zum Speichern der zweiten Informationen in dem Speicher (3032, 930).

15. Verfahren nach Anspruch 14, wobei der Speicher (3032, 930) des Netzwerkadapters ferner die zweiten Informationen speichert, die zweiten Informationen die Markierung umfassen, die aus dem zweiten Prozessor erfasst wird und die bei dem Markierungsabgleich, der durch den Netzwerkadapter durchgeführt wird, fehlschlägt, und das Verfahren ferner Folgendes umfasst:
Durchführen eines Markierungsabgleichs basierend auf einer zweiten Markierung und der Markierung, die in den zweiten Informationen enthalten ist, wobei die zweite Markierung eine zweite Sendenachricht anzeigt, die durch den Sendeknoten gesendet wird, die zweite Sendenachricht zweite Daten oder Informationen über die zweiten Daten umfasst und die zweite Markierung aus der zweiten Sendenachricht erfasst wird, die durch den Sendeknoten gesendet und über ein Netzwerk (120, 120c, 130, 160) durch den Netzwerkadapter empfangen wird; und
wenn der Markierungsabgleich fehlschlägt, Speichern der zweiten Markierung in einem Speicherplatz zum Speichern der ersten Informationen in dem Speicher (3032, 930).

## Revendications

1. Adaptateur réseau (303, 900) pour un nœud de réception (121, 122), dans lequel l'adaptateur réseau comprend un premier processeur (3031, 920) et une mémoire (3032, 930), dans lequel la mémoire (3032, 930) est configurée pour stocker un programme lisible par ordinateur et des premières informations ; et
le premier processeur est configuré pour exécuter le programme lisible par ordinateur dans la mémoire (3032, 930), pour permettre à l'adaptateur réseau d'effectuer les opérations suivantes :
la réalisation (S403) d'une correspondance de balise sur la base d'une première balise et d'une balise comprise dans les premières informations,
dans lequel la balise comprise dans les premières informations a échoué dans la correspondance de balise effectuée par l'adaptateur réseau et indique un premier message d'envoi envoyé par un nœud d'envoi (111, 112), le premier message d'envoi comprend des premières données ou des informations sur les premières données, et
dans lequel la première balise est acquise à partir d'un premier message de réception généré par un second processeur (301) qui se trouve dans le nœud de réception (121, 122) comprenant l'adaptateur réseau ; et
si la correspondance de balise réussit, l'envoi des premières données au second processeur (301).

2. Adaptateur réseau (303, 900) selon la revendication 1, dans lequel la mémoire (3032, 930) est également configurée pour stocker des secondes informations, les secondes informations comprennent une balise qui est acquise à partir du second processeur (301) et qui échoue dans la correspondance de balise effectuée par l'adaptateur réseau, et les opérations effectuées par l'adaptateur réseau comprennent également :
si la correspondance de balise échoue, le stockage de la première balise dans un espace de stockage pour stocker les secondes informations dans la mémoire (3032, 930).

3. Adaptateur réseau (303, 900) selon la revendication 1, dans lequel le second processeur (301) est connecté à l'adaptateur réseau (303, 900) à travers un bus, l'adaptateur réseau est configuré pour recevoir, à travers le bus, la première balise envoyée par le second processeur (301), et l'adaptateur réseau est configuré pour envoyer les premières données au second processeur (301) à travers le bus.

4. Adaptateur réseau (303, 900) selon l'une quelconque des revendications 1 à 3, dans lequel le premier message d'envoi est transmis, à travers un réseau (120, 120c, 130, 160), par un processus source exécuté par le nœud d'envoi (111, 112) à un processus de destination exécuté par le nœud de réception (121, 122).

5. Adaptateur réseau (303, 900) selon l'une quelconque des revendications 1 à 4, dans lequel le nœud de réception (121, 122) et le nœud d'envoi (111, 112) communiquent entre eux à travers une interface de transmission de messages, MPI.

6. Adaptateur réseau (303, 900) selon l'une quelconque des revendications 1 à 5, dans lequel, si la correspondance de balise réussit, les opérations effectuées par l'adaptateur réseau comprennent également :
l'acquisition des premières données à partir des premières informations sur la base de la première balise, dans lequel les premières informations comprennent les premières données ; ou
l'acquisition des premières données sur la base des informations sur les premières données associées à la première balise, dans lequel les informations sur les premières données indiquent des informations sur une adresse à laquelle les premières données sont stockées.

7. Adaptateur réseau (303, 900) selon la revendication 6, dans lequel l'acquisition des premières données sur la base de l'adresse associée à la première balise comprend :
l'acquisition des premières données à partir d'un espace de stockage qui se trouve dans la mémoire (3032, 930) et qui est indiqué par l'adresse associée à la première balise.

8. Adaptateur réseau (303, 900) selon la revendication 6, dans lequel l'acquisition des premières données sur la base de l'adresse associée à la première balise comprend :
l'acquisition des premières données à partir d'un espace de stockage qui se trouve dans le nœud d'envoi et qui est indiqué par l'adresse associée à la première balise.

9. Adaptateur réseau (303, 900) selon l'une quelconque des revendications 6 à 8, dans lequel les opérations effectuées par l'adaptateur réseau comprennent également :
la suppression de la première balise dans les premières informations.

10. Adaptateur réseau (303, 900) selon l'une quelconque des revendications 2 à 9, dans lequel la mémoire (3032, 930) stocke également les secondes informations, les secondes informations comprennent la balise qui est acquise à partir du second processeur et qui échoue dans la correspondance de balise effectuée par l'adaptateur réseau, et les opérations effectuées par l'adaptateur réseau comprennent également :
la réalisation d'une correspondance de balise sur la base d'une seconde balise et de la balise comprise dans les secondes informations, dans lequel la seconde balise indique un second message d'envoi envoyé par le nœud d'envoi, le second message d'envoi comprend des secondes données ou des informations sur les secondes données, et la seconde balise est acquise à partir du second message d'envoi qui est envoyé par le nœud d'envoi et reçu par l'adaptateur réseau à travers le réseau (120, 120c, 130, 160) ; et
si la correspondance de balise échoue, le stockage de la seconde balise dans un espace de stockage pour stocker les premières informations dans la mémoire (3032, 930).

11. Adaptateur réseau (303, 900) selon l'une quelconque des revendications 2 à 10, dans lequel les opérations effectuées par l'adaptateur réseau comprennent également :
la commande d'une exécution d'une opération d'écriture de balise sur les premières informations et les secondes informations.

12. Dispositif informatique, dans lequel le dispositif informatique comprend le second processeur (301) et l'adaptateur réseau (303, 900) selon l'une quelconque des revendications 1 à 11, le second processeur et l'adaptateur réseau sont connectés à travers un bus, et le second processeur et l'adaptateur réseau transmettent une balise et des données à travers le bus.

13. Procédé d'acquisition de données, dans lequel le procédé est exécuté par un adaptateur réseau (303, 930) selon l'une des revendications précédentes, compris dans un nœud de réception (121, 122), comprenant :
la réalisation (S403) d'une correspondance de balise sur la base d'une première balise et d'une balise indiquée par des premières informations,
dans lequel la balise comprise dans les premières informations a échoué dans la correspondance de balise effectuée par l'adaptateur réseau et indique un premier message d'envoi envoyé par un nœud d'envoi (111, 112), le premier message d'envoi comprend des premières données ou des informations sur les premières données, et
dans lequel la première balise est acquise à partir d'un premier message de réception généré par un second processeur (301) qui se trouve dans le nœud de réception (121, 122), et les nœuds d'envoi communiquent entre eux à travers une interface de transmission de messages MPI ; et
si la correspondance de balise réussit, l'envoi des premières données au second processeur.

14. Procédé selon la revendication 13, dans lequel une mémoire (3032, 930) de l'adaptateur réseau stocke également des secondes informations, les secondes informations comprennent une balise acquise auprès du second processeur et qui échoue lors de la correspondance de balise effectuée par l'adaptateur réseau, et le procédé comprend également :
si la correspondance de balise échoue, le stockage de la première balise dans un espace de stockage pour stocker les secondes informations dans la mémoire (3032, 930).

15. Procédé selon la revendication 14, dans lequel la mémoire (3032, 930) de l'adaptateur réseau stocke également les secondes informations, les secondes informations comprennent la balise acquise auprès du second processeur et qui échoue lors de la correspondance de balise effectuée par l'adaptateur réseau, et le procédé comprend également :
la réalisation d'une correspondance de balise sur la base d'une seconde balise et de la balise comprise dans les secondes informations, dans lequel la seconde balise indique un second message d'envoi envoyé par le nœud d'envoi, le second message d'envoi comprend des secondes données ou des informations sur les secondes données, et la seconde balise est acquise à partir du second message d'envoi envoyé par le nœud d'envoi et reçu par l'adaptateur réseau à travers un réseau (120, 120c, 130, 160) ; et
si la correspondance de balise échoue, le stockage de la seconde balise dans un espace de stockage pour stocker les premières informations dans la mémoire (3032, 930).
